Europäisches Patentamt

European Patent Office

Office européen des brevets

(19)

(11) Publication number: **0 251 777**
**A2**

## (12) EUROPEAN PATENT APPLICATION

(21) Application number: **87305811.9**

(22) Date of filing: **01.07.87**

(51) Int. Cl.⁴: **F 25 D 19/00**
**B 60 P 3/20, F 25 B 27/00,**
**F 25 D 17/04**

(30) Priority: **01.07.86 GB 8615986**

(43) Date of publication of application:
**07.01.88 Bulletin 88/01**

(84) Designated Contracting States:
**DE ES FR GB IT NL**

(71) Applicant: **BOALLOY LIMITED**
**Radnor Park Trading Estate West Heath**
**Congleton Cheshire CW12 4QA (GB)**

(72) Inventor: **Broadbent, Edward Gerald**
**91 Park Lane**
**Sandbach Cheshire, CW11 9EE (GB)**

(74) Representative: **Massey, Alexander et al**
**MARKS & CLERK Suite 301 Sunlight House Quay Street**
**Manchester, M3 3JY (GB)**

(54) Van Bodies.

(57) A refrigerator adapted for use with an insulated van body, the refrigerator and van body having complementary attachment means whereby the refrigerator can be readily demounted from the van body when the latter is to be used for transporting non-refrigerated, e.g. chilled, produce.

Bundesdruckerei Berlin

**Description**

VAN BODIES

This invention relates to van bodies for use in transporting refrigerated or chilled produce.

The term "van body" is to be construed as including any structure defining a cargo-holding space on a road vehicle (trailer or self-propelled), on a railway wagon, or a container transportable by road, rail, sea or air.

The present invention is especially but not exclusively applicable to a curtainsided van body as generally disclosed in our U.K. Patent Specification No. 2106166 which is an insulated curtainsided van body having opposed open sides closed by insulated curtains tensioned, when in the closed condition, both horizontally and vertically.

It is an object of the present invention to provide an insulated van body (curtainsided or solid-sided) adapted for use in transporting either refrigerated or chilled produce and an improved refrigerator for use with such a van body.

According to a first aspect of the present invention there is provided a refrigerator adapted for use with an insulated van body, the refrigerator and van body having complementary attachment means whereby the refrigerator can be readily demounted from the van body when the latter is to be used for transporting non-refrigerated, e.g. chilled, produce.

Preferably, the refrigerator comprises laterally-spaced hook means adapted for engagement in complementary aperture means in an end bulkhead of the van body.

Preferably, there are two pairs of vertically-spaced hooks with the hooks of each pair being mechanically tied together for simultaneous movement into and out of a bulkhead engaging position.

Preferably, each hook is of wedge-like configuration whereby the refrigerator is not only held against the bulkhead but is sealingly held thereagainst.

Preferably, the hooks of each pair are mechanically tied together by rotatable screw means.

Preferably, the refrigerator is supported at its bottom on a protruding beam structure of the chassis of the van body.

Preferably, the refrigerator has formations for receiving the forks of a fork lift truck whereby the refrigerator is mounted on or demounted from the van body.

An alternative quick-release securing arrangement is preferably toggle means operable from inside the van body to releasably engage and hold the refrigerator in position on the van body against the bulkhead.

Preferably, the refrigerator employs as the refrigerant R502.

Preferably, the refrigerator comprises an electrically-driven, semi-hermetic motor-compressor thereby obviating or mitigating refrigerant loss through shaft seals as occurs with engine-driven compressors normally employed in van refrigerators.

Preferably, the electricity supply for the refrigeration system is provided by a generator set driven by a diesel engine.

The refrigeration system, according to the present invention, may be powered from external electrical power sources and a phase rotation device is provided to ensure the necessary compatability between the refrigerator, according to the present invention and such external power source.

Preferably, the evaporator of the refrigerator is supported in a free-floating cage whereby any thermal bridge between the cage and the remainder of the refrigerator structure is avoided. The cage is preferably mounted using engineering rubber to give the free-floating effect.

Other aspects of the refrigerator and the refrigerating system will be referred to in the following description.

An embodiment of the present invention will now be described, by way of example, with reference to the accompanying drawings, in which:-

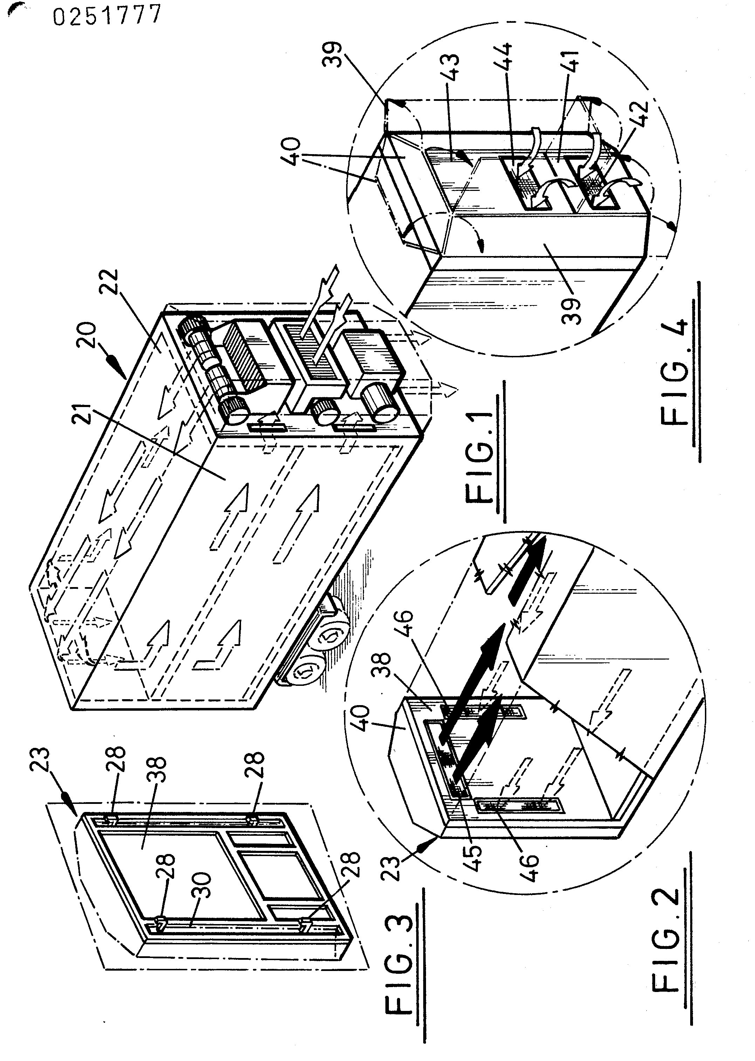

Fig. 1 is a perspective view of an insulated curtainsided van body incorporating a refrigerator according to the present invention;

Fig. 2 is a perspective detail view of Fig. 1 from the rear of the refrigerator;

Fig. 3 is a view similar to Fig. 2 showing the refrigerator attachment means;

Fig. 4 is a detail perspective view from the front of the refrigerator;

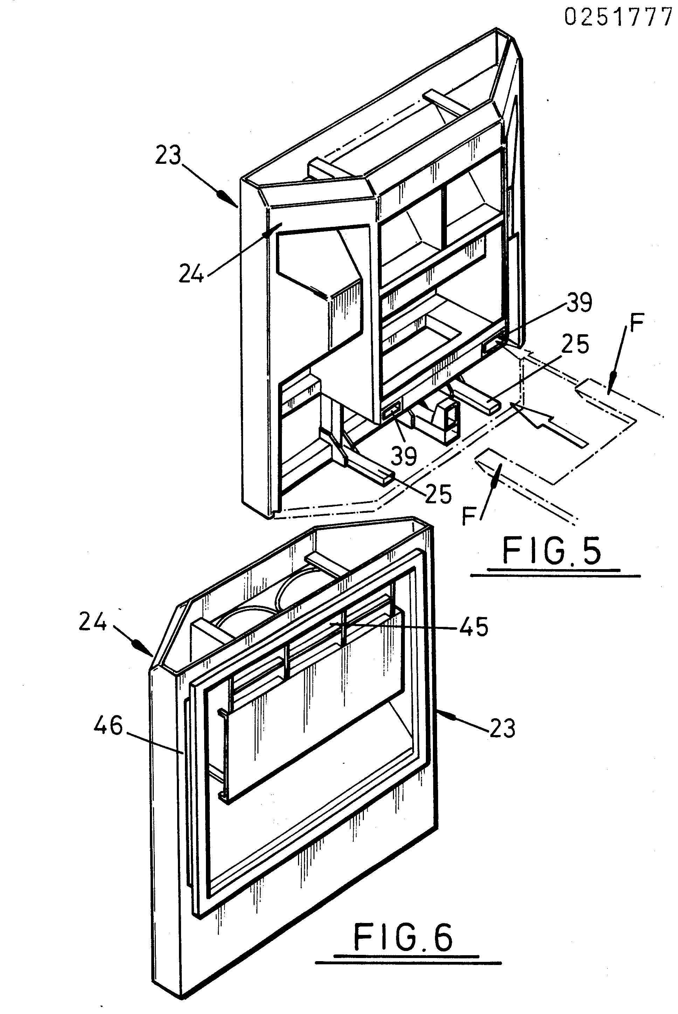

Fig. 5 is a diagrammatic perspective view corresponding to Fig. 4 showing further details of the refrigerator;

Fig. 6 is a diagrammatic perspective view corresponding to Fig. 2 but showing more detail of the refrigerator;

Fig. 7 is a perspective view of the refrigerator body structure;

Figs. 8 to 10 are perspective detail views of the refrigerator attachment means;

Fig. 11 is a front view of the refrigerator layout;

Fig. 12 is a sectional view on the line XII-XII of Fig. 11; and

Fig. 13 is a sectional view on the line XIII-XIII of Fig. 11.

The curtainsided insulated van body 20 is of trailer configuration and is generally of the insulated construction as disclosed in our aforesaid Patent Specification with, inter alia, insulated curtains 21 tensioned horizontally and vertically in the closed, produce-transporting condition. The insulated construction of the van body is described and illustrated in the aforesaid Patent Specification and consequently will not be described here in detail.

The van body 20 has a front bulkhead generally indicated at 22 having an upper horizontal inlet (not shown) for refrigerated air, and side or lateral vertical outlets (not shown) for return air.

This bulkhead 22 can simply be closed off, i.e. inlet and outlets sealed by a blanking-off bulkhead cover adapted for easy attachment to and detachment from the front bulkhead 22 when the insulated van body 20 is to be used for transporting chilled produce.

When, however, the insulated van body 20 is to be employed for transporting refrigerated produce to a refrigerator 23 according to the present invention is attached to the front bulkhead 22.

The refrigerator 23 comprises a semi-monocoque body 24 which is supported cantilever fashion on a pair of beams 25 forming part of the chassis supporting the van body 20.

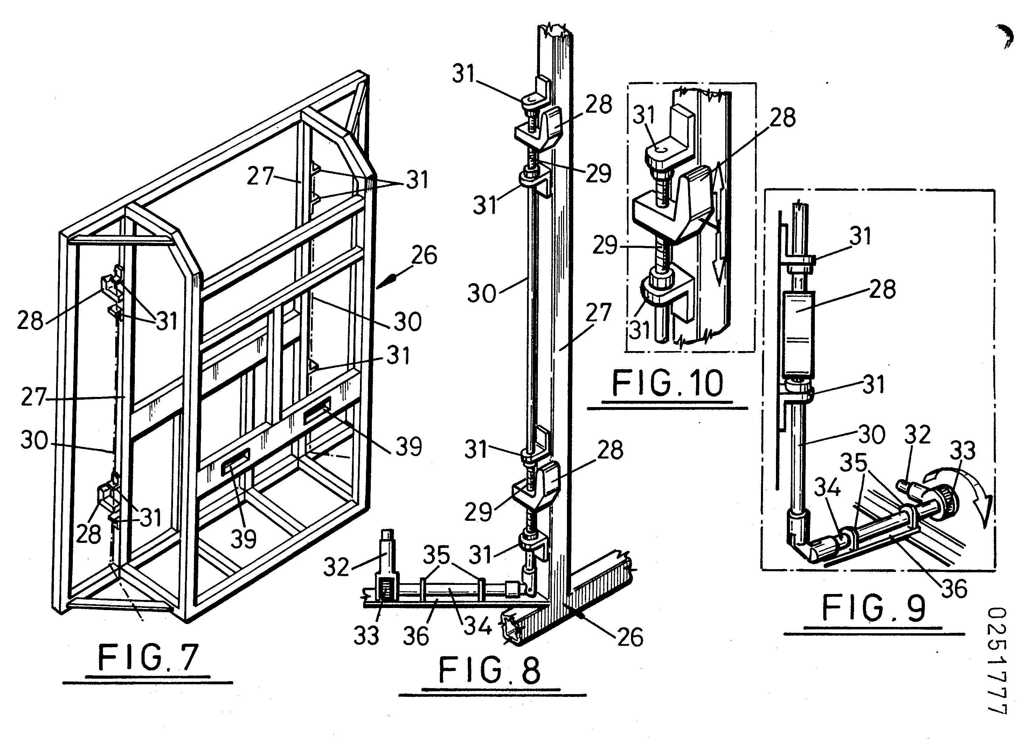

The refrigerator body 24 has a framework 26 (see Fig. 7) incorporating vertical beams 27, two of which carry means for attaching the refrigerator 23 to the front bulkhead 22.

These attachment means comprise a pair of vertically-spaced, wedge-configuration, upwardly-directed hooks 28 screw-engaging screwed sections 29 of a vertical rotatable shaft 30 supported in brackets 31 secured to the respective vertical beam 27.

Each vertical shaft 30 is manually rotatable from the respective side of the refrigerator body 24 by a lever 32 operating a pawl-and-ratchet mechanism 33 which rotates a horizontal shaft 34 supported in bearings 35 on a support plate 36, the horizontal shaft 34 rotating the vertical shaft 30 through a universal connection or coupling 37.

When it is desired to use the insulated van body 20 for transporting refrigerated produce, the blanking-off front bulkhead cover is removed.

The refrigerator 23 is engaged by the forks F of a fork lift truck and for this purpose the refrigerator framework 27 is formed with fork-receiving sockets 39.

The refrigerator 23 is elevated by the fork lift truck and is rested on the support beams 25 with the attachment means (hooks 28) vertically aligned with hook-receiving sockets or apertures (not shown) in the front bulkhead 22. The vertical shafts 30 are then rotated to cause upward movement of the hooks 28 into the sockets or apertures. When engagement between the hooks 28 and the front bulkhead is completed, the refrigerator back wall 38 is sealingly clamped against the front bulkhead 22.

It is to be understood that the major support of the refrigerator 23 on the insulated van body 20 is via the chassis cantilever beams 25.

The refrigerator 23 is suitably clad with panels and included among these is two full-height side doors 39, a top door or roof 40 and a front panel 41, all of which are openable to permit access to the refrigeration system of the refrigerator 23.

The side doors 39 also permit access to the operating means 32, 33 for the attachment hooks 28 and the front panel 41 permits additionally access to the fork lift sockets 39.

The panel 41 has an air inlet grille 42 for ingress of cooling air for the engine powering the refrigerator 23, while the front wall 43 above the panel 41 has an inlet 44 for ingress of air for refrigeration purposes.

The back wall 38 of the refrigerator 23 has a top horizontal duct 45 for ingress of refrigerating air into the insulated van body 20, and two vertical lateral ducts 46 for egress of air from the insulated van body 20.

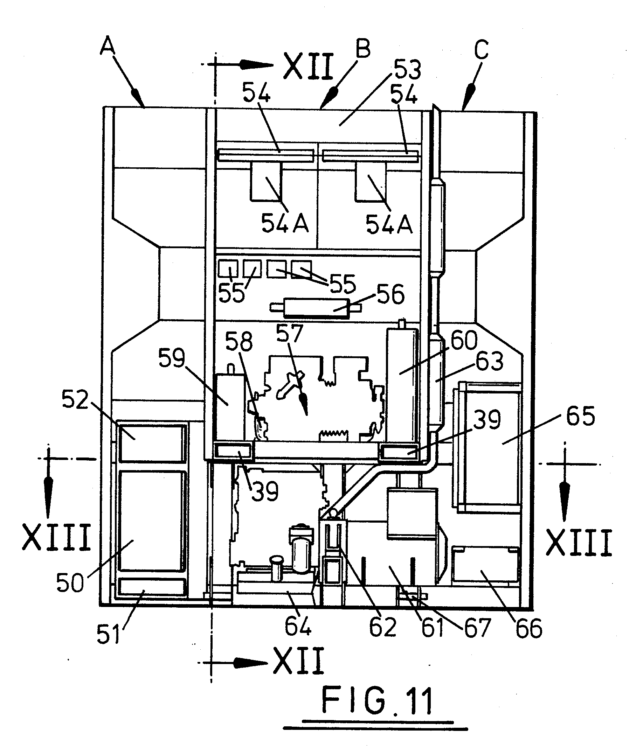

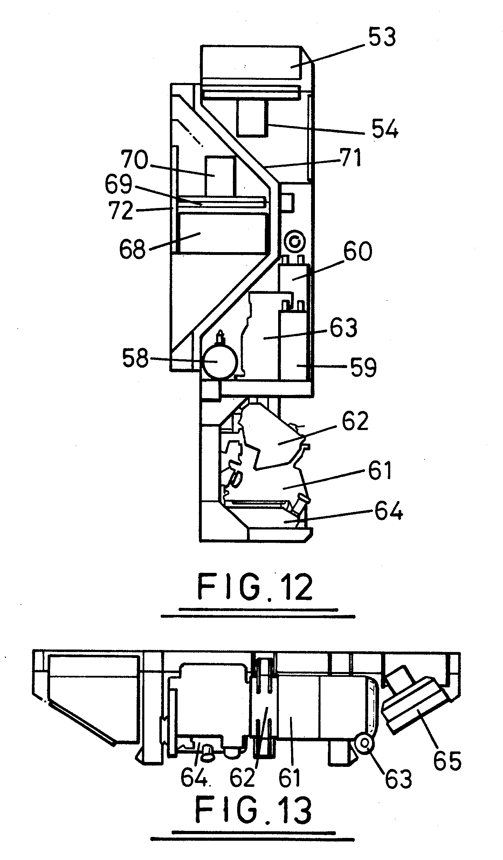

Reference is now made to Figs. 11 to 13 which show the layout of the refrigeration system.

It is to be noted here that the refrigerant employed in the system is R502 (a fluorinated hydrocarbon refrigerant).

The layout comprises two lateral regions A and C normally closed by doors 39 and a central region B, accessed through panel 41.

Region A houses the controls for the electric operating system for the refrigerator, the switchgear and indicator lights being located at 50 and the control switch panel at 51.

The controls incorporate a logic unit which can be interrogated if a fault occurs to determine where the fault arises. The terminal box for the controls is indicated at 52 and has facility for the pluggingin of a test meter.

The main refrigeration system components are in region B and comprises, from the top downwards, an upper condenser 53 and condenser fans 54 driven by motors 54A adjacent inlet 45; refrigeration control switches 55; a heat exchanger 56; a compressor 57 with alongside a receiver 58, a separator 59 and a suction accumulator 60; a generator set 61 driven by a diesel engine 62, whereof the stack is indicated at 63, and alongside which is the engine sump 64.

In region C is located the engine cooling radiator 65 and batteries 66.

The generator set 61 is supported on rebound control anti-vibration mountings 67.

The motor compressor 57 is, as aforesaid, of semi-hermetic construction and is, of course, electrically driven by the diesel engine/alternator combination 61, 62.

The evaporator of the refrigerating system is indicated at 68, and is disposed horizontally with air being drawn vertically therethrough at speed under the action of a fan 69 driven by a motor 70. The evaporator 68 has a low intake velocity and a high discharge velocity.

The evaporator 68 is supported in a free-floating manner by a cage 71 to ensure no thermal bridge between the evaporator 68 and the rest of the refrigerator structure. An anti-crush zone 72 protects the evaporator 68 and fan and motor 69 and 70 and is disposed between them and the front bulkhead 22 when the refrigerator 23 is mounted on the insulated van body 20.

The storage vessels for the refrigerant are not shown but would normally be housed in region C.

The high velocity refrigerating air discharging from the refrigerator 23 into the insulated van body 20 forms a boundary layer with the roof of the latter and flows therealong and downwards therefrom to maintain the produce at the desired temperature.

The refrigeration system also comprises a means for increasing the humidity within the van body 20 when required. Such a means is preferably fitted within the semi-monocoque body 24 and is preferably a steam-production arrangement achieved by conveying water across or into the region of a heated pipe coil of the refrigeration system, the generated steam being directed into the van body 20.

The refrigerating air discharging from the refrigerator 23 into the insulated van body 20 contains ethylene gas and it is desirable that such gas be extracted from the interior of the van body 20. This can be achieved by providing a means for absorbing the ethylene gas. Such a means may simply be a receptacle again carried by the semi-monocoque body 24 and/or within the van body containing, for example, potassium permanganate.

The weight of the refrigerator can be reduced by using pressed structures wherever possible.

In the specification and claims the term "refrigeration" is to be construed to include "chilling".

It will be manifest that with the refrigerator 23 demounted from the van body 20, i.e. when it is not required, the refrigerator 23 can be serviced easily and, indeed, it can be installed temporarily in a cold room to provide the necessary refrigeration therein.

## Claims

1. A refrigerator adapted for use with an insulated van body, the refrigerator and van body having complementary attachment means whereby the refrigerator can be readily demounted from the van body when the latter is to be used for transporting non-refrigerated, e.g. chilled, produce.

2. A refrigerator as claimed in claim 1, comprising laterally-spaced hook means adapted for engagement in complementary aperture means in an end bulkhead of the van body.

3. A refrigerator as claimed in claim 2, in which there are two pairs of vertically-spaced hooks with the hooks of each pair being mechanically tied together for simultaneous movement into and out of a bulkhead engaging position.

4. A refrigerator as claimed in claim 3, in which each hook is of wedge-like configuration whereby the refrigerator is not only held against the bulkhead but is sealingly held thereagainst.

5. A refrigerator as claimed in claim 3 or 4, in which the hooks of each pair are mechanically tied together by rotatable screw means.

6. A refrigerator as claimed in any one of claims 1 to 5, supported at its bottom on a protruding beam structure of the chassis of the van body.

7. A refrigerator as claimed in any one of claims 1 to 6, comprising formations for receiving the forks of a fork lift truck whereby the refrigerator is mounted on or demounted from the van body.

8. A refrigerator as claimed in claim 1, comprising a quick-release securing arrangement in the form of toggle means operable from inside the van body to releasably engage and hold the refrigerator in position on the van body against an end bulkhead.

9. A refrigerator as claimed in any one of claims 1 to 8 employing as refrigerant R502.

10. A refrigerator as claimed in any one of claims 1 to 9 comprising an electrically-driven, semi-hermetic motor-compressor thereby obviating or mitigating refrigerant loss through shaft seals as occurs with engine-driven compressors normally employed in van refrigerators.

11. A refrigerator as claimed in any one of claims 1 to 10, in which the electricity supply for the refrigeration system is provided by a generator set driven by a diesel engine.

12. A refrigerator as claimed in any one of claims 1 to 10, in which the refrigeration system is powered from an external electrical power source and a phase rotation device is provided to ensure the necessary compatability between the refrigerator and such external power source.

13. A refrigerator as claimed in any one of claims 1 to 12, comprising an evaporator supported in a free-floating cage whereby any thermal bridge between the cage and the remainder of the refrigerator structure is avoided.

14. A refrigerator as claimed in claim 13, in which the cage is mounted using engineering rubber to give the free-floating effect.

15. A refrigerator as claimed in any one of claims 1 to 14, in which the refrigeration system comprises means for increasing the humidity within the area being refrigerated.

16. A refrigerator as claimed in any one of claims 1 to 15, comprising means for extracting ethylene gas from the area being refrigerated.

17. A refrigerator as claimed in any one of claims 1 to 16 releasably mounted on an end bulkhead of a van body.

18. A refrigeration system as claimed in any one of claims 9 to 16.

0251777

FIG. 1

FIG. 2

FIG. 3

FIG. 4

0251777

FIG.5

FIG.6

**FIG. 7**

27 31 26 30 31 27 30 28 31 28 31 39 39

**FIG. 8**

31 28 29 30 31 27 31 29 31 32 35 31 29 33 36 34 26

**FIG. 10**

31 31 28 29 31

**FIG. 9**

31 28 31 30 32 33 35 34 36

0251777

FIG.11

0251777

FIG. 12

FIG. 13